# EUROPEAN PATENT SPECIFICATION

(11) **EP 2 371 664 B1**
(45) Date of publication and mention of the grant of the patent: **02.12.2015**
(21) Application number: 08879147.0
(22) Date of filing: 25.12.2008
(51) Int. Cl.: B61L 15/00, B61L 25/02

(54) **TRAIN-MOUNTED VIDEO INFORMATION DISTRIBUTION AND DISPLAY SYSTEM AND DISPLAY SWITCHING METHOD THEREOF**
AN EINEM ZUG ANGEBRACHTES SYSTEM ZUR VERTEILUNG UND ANZEIGE VON VIDEOINFORMATIONEN UND ANZEIGENSCHALTVERFAHREN DAFÜR
SYSTÈME D'AFFICHAGE ET DE DISTRIBUTION D'INFORMATIONS VIDÉO MONTÉ SUR UN TRAIN ET SON PROCÉDÉ DE COMMUTATION D'AFFICHAGE

(43) Date of publication of application: 05.10.2011
(73) Proprietor: Mitsubishi Electric Corporation, Tokyo 100-8310 (JP)
(72) Inventor: MORIMOTO, Kazunari, Tokyo 100-8310 (JP); OKI, Masao, Tokyo 100-8310 (JP)
(74) Representative: Zech, Stefan Markus
(86) International application number: PCT/JP2008/073641
(87) International publication number: WO 2010/073351

(56) References cited:
- EP-A2- 1 187 085
- JP-A- 2002 087 267
- JP-A- 2002 152 156
- JP-A- 2008 160 204
- US-A1- 2007 100 698
- US-A1- 2007 152 850
- US-A1- 2007 226 762

## Description

### TECHNICAL FIELD

The present invention relates to a train-mounted video information distribution and display system that provides video information to passengers in passenger compartments, and a display switching method thereof.

### BACKGROUND ART

In recent years, because of diversification of life patterns and behavioral patterns of people, advertisements by mass media and the like give enormous influences to these people with diversified life patterns. Furthermore, people yearn for obtaining new information, due to popularization of the Internet in recent years. For example, an advertisement video that is shown or displayed in a train is expected to have a significant advertising effect. Particularly, because the inside of a train is a confined space and also because actions of passengers are limited, the advertising effect is considered to be particularly significant, and the demand for advertisement videos is rapidly increasing.

Conventionally, there have been various patent publications concerning advertisement videos displayed in a train. For example, Patent Document 1 mentioned below discloses a technique of performing display control of determining whether to display information concerning a new interruption depending on the presence and a priority of interruption display information such as a kilometrage display, a display of door opening/closing, an emergency message display, a real-time information display, to provide a train-mounted video information distribution and display system that can securely provide various kinds of video information to passengers in passenger compartments with a simple configuration, without depending on an artificial operation by an operator and the like.
Patent Document 1: Japanese Patent Application Laid-open No. 2002-127905

EP 1 187 085 A2 discloses a system for presenting information to passengers on the basis of predetermined operation sections of a conveyance or route.

### DISCLOSURE OF INVENTION

### PROBLEM TO BE SOLVED BY THE INVENTION

However, according to conventional techniques including that described in Patent Document 1 mentioned above, information changed in real time is interruption information from which any advertising effect is not expected. On the other hand, concerning video information from which an advertising effect is expected, only video information stored in a storage device in advance is repeatedly displayed. This has a problem that the attention degree of passengers in a train to the video information becomes lower as time passes, and the advertising effect becomes lower accordingly.

Meanwhile, to increase the advertising effect, there has been considered a method of broadcasting many pieces of video information by preparing them in advance. In this case, it is necessary to set and reset priorities of video information and interruption information each time when video information is added. Therefore, when video information is frequently added and updated, there is a problem that the cost required to prepare the video information increases and the maintainability and serviceability are reduced.

The present invention has been achieved in view of the above problems, and an object of the present invention is to provide a train-mounted video information distribution and display system capable of sufficiently increasing an advertising effect of advertisement videos to be broadcast in a train and suppressing reduction of the maintainability and serviceability, and to provide a display switching method of the system.

### MEANS FOR SOLVING PROBLEM

In order to solve the above problem and in order to attain the above object, the present invention provides a train-mounted video information distribution and display system according to independent claim 1.

Further, the present invention provides a display switching method according to independent claim 11. Further embodiments of the invention may be realised in accordance with the dependent claims.

### EFFECT OF THE INVENTION

According to the train-mounted video information distribution and display system of the present invention, display programs, each including one or more pieces of video information that are determined based on segmentation information for assigning a predetermined section within a running section of a train, are sequentially read out and distributed to a display device. With this configuration, the determined one or more pieces of video information are repeatedly displayed in the predetermined section. Consequently, an advertising effect of advertisement videos broadcast in the train can be sufficiently increased, and thus reduction of the maintainability and serviceability can be suppressed.

### BRIEF DESCRIPTION OF DRAWINGS

[FIG. 1] FIG. 1 is an explanatory diagram of a schematic image of a train-mounted video information distribution and display system according to a first embodiment of the present invention.
[FIG. 2] FIG. 2 depicts an overall system configuration of the train-mounted video information distribution and display system according to the first embodiment of the present invention.
[FIG. 3] FIG. 3 is a block diagram mainly depicting a configuration of a video-information distribution device shown in FIG. 2.
[FIG. 4] FIG. 4 is a flowchart of a display-program determination flow and a broadcast-video display flow in the train-mounted video information distribution and display system according to the present embodiment.
[FIG. 5] FIG. 5 is an example of a program table as one of pieces of reference information.
[FIG. 6] FIG. 6 is an explanatory diagram of a concept of an area determination performed based on the program table shown in FIG. 5.
[FIG. 7] FIG. 7 is an example of a case of broadcasting another advertisement video by using an unoccupied time.
[FIG. 8] FIG. 8 is an example of a determination table for determining an area number by using only kilometrage.
[FIG. 9] FIG. 9 is an example of a determination table for determining an area number by using information of a last station and a next station.
[FIG. 10] FIG. 10 is an example of a determination table in which information of "number of passengers" is used as a status.
[FIG. 11] FIG. 11 is an example of a determination table in which information of "temperature" is used as a status.

### EXPLANATIONS OF LETTERS OR NUMERALS

- 10: train information device
- 10a: train identification information
- 10b: train position information
- 10c: train operation information
- 10d: train current-status information
- 10e: train instruction information
- 10f: weather information
- 20: video-information distribution device
- 21: display-program determining unit
- 22: distribution control unit
- 24: video-information storing unit
- 25: display-program storage unit
- 28, 30: transmission path
- 31: branching device
- 32: terminating device
- 33: amplifying device
- 40: display device
- 50, 55: transmitting/receiving device
- 51: ground station
- 53: information processing device

### BEST MODE(S) FOR CARRYING OUT THE INVENTION

Exemplary embodiments of a train-mounted video information distribution and display system and a display switching method thereof according to the present invention will be explained below in detail with reference to the accompanying drawings. The present invention is not limited to the embodiments.

### First embodiment.

### (System configuration)

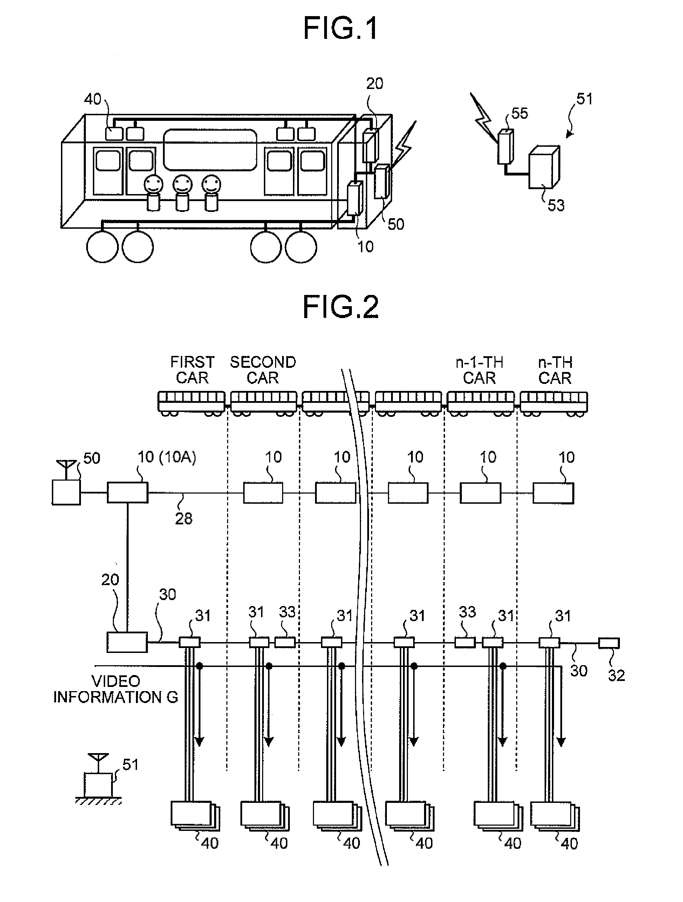

First, a configuration of a train-mounted video information distribution and display system according to a first embodiment of the present invention is explained with reference to FIGS. 1 and 2. FIG. 1 is an explanatory diagram of a schematic image of the train-mounted video information distribution and display system according to the first embodiment of the present invention. FIG. 2 depicts an overall system configuration of the train-mounted video information distribution and display system according to the first embodiment of the present invention.

The train-mounted video information distribution and display system according to the present embodiment is applied to a train constituted by plural vehicles (first car to n-th car). A train side includes a train information device 10, a video-information distribution device 20, a display device 40, a transmitting/receiving device 50 or the like. A way side includes an information processing device 53 and a transmitting/receiving device 55 that constitute a ground station 51.

The train information device 10 processes train identification information 10a that includes a train number for identifying a train, train position information 10b including kilometrage from a departing station and an area number that shows a running area of a train, train operation information 10c including stopping-station information and an estimated time of arrival, train current-status information 10d including an arrival time and the number of passengers, train instruction information 10e including a door opening/closing instruction, a stopping instruction or the like, and weather information 10f including temperature information, atmospheric pressure information, and weather information. The train information device 10 of a leading car is connected to various control-operation devices (not shown) such as a master controller, and performs an input/output process of various kinds of information described above. The train information devices 10 that are mounted in vehicles are connected to each other via transmission paths 28 that are provided between the vehicles, and share train information by performing mutually the same operation. Various pieces of information relevant to a train including the train identification information 10a, the train position information 10b, the train operation information 10c, the train current-status information 10d, the train instruction information 10e, and the weather information 10f are collectively called "train information".

The video-information distribution device 20 is mounted in a leading car (the first car), for example, and is connected to a train information device 10 (10A) of this vehicle to input train information and output necessary video information. Details of the video-information distribution device 20 are described later. A branching device 31 and an amplifying device 33 are provided between the video-information distribution device 20 and the display device 40 that is provided in each vehicle, and a terminating device 32 is provided at a rear-end portion of a last vehicle. These devices are connected to each other via a transmission path 30. The transmission path 30 transmits an output signal (hereinafter, "video-information distribution signal") that includes video information G from the video-information distribution device 20 to each vehicle. The branching device 31 causes a signal that flows in the transmission path 30 to be branched to the display device 40 that is provided in each vehicle. The terminating device 32 prevents the video-information distribution signal that flows in the transmission path 30 from being reflected at a terminal end of the transmission path 30. The amplifying device 33 prevents the video-information distribution signal that flows in the transmission path 30 from being attenuated. Plural display devices 40 are provided in each vehicle as shown in the drawings. The transmitting/receiving device 50 is connected to the train information device 10 (10A), inputs information from a ground station 51 side by air, and outputs the information to the video-information distribution device 20. The transmitting/receiving device 50 can be also directly connected to the video-information distribution device 20. In this case, information that becomes necessary at a train information device 10 side is transmitted via the video-information distribution device 20.

### (Configuration of the video-information distribution device 20)

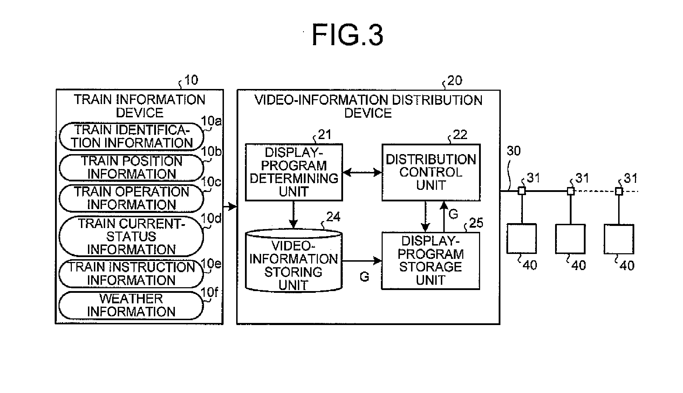

FIG. 3 is a block diagram mainly depicting a configuration of the video-information distribution device 20 shown in FIG. 2. In FIG. 3, the video-information distribution device 20 includes: a display-program determining unit 21 that automatically determines a display program; a video-information storing unit 24 that stores video information that becomes a source of a display program, reference information (reference table) that is necessary to determine a display program, route information that is necessary to understand a running position and a running section of a train or the like; a display-program storage unit 25 that stores a display program that is determined by the display-program determining unit 21; and a distribution control unit 22 that controls distribution of a display program stored in the display-program storage unit 25 to the display device 40, which is provided in each vehicle.

In the following explanations, it is assumed that video information and reference information that are necessary for the display-program determining unit 21 to determine a display program are stored in the video-information storing unit 24, and that train information that is necessary to determine a display program is obtained from the train information device 10. Needless to mention, an assumption is not limited to these examples. For example, train information can be occasionally stored in the video-information storing unit 24. On the contrary, video information that becomes a display program can be received from the ground station 51 via the transmitting/receiving device 50. In the case of this example, preferably, the video-information distribution device 20 has a storage unit (a memory) that is different from the display-program storage unit 25 for temporarily storing video information received from the ground station 51. Although video information is explained based on analog data, it is needless to mention that the present invention can be also applied to digital data.

### (System operations)

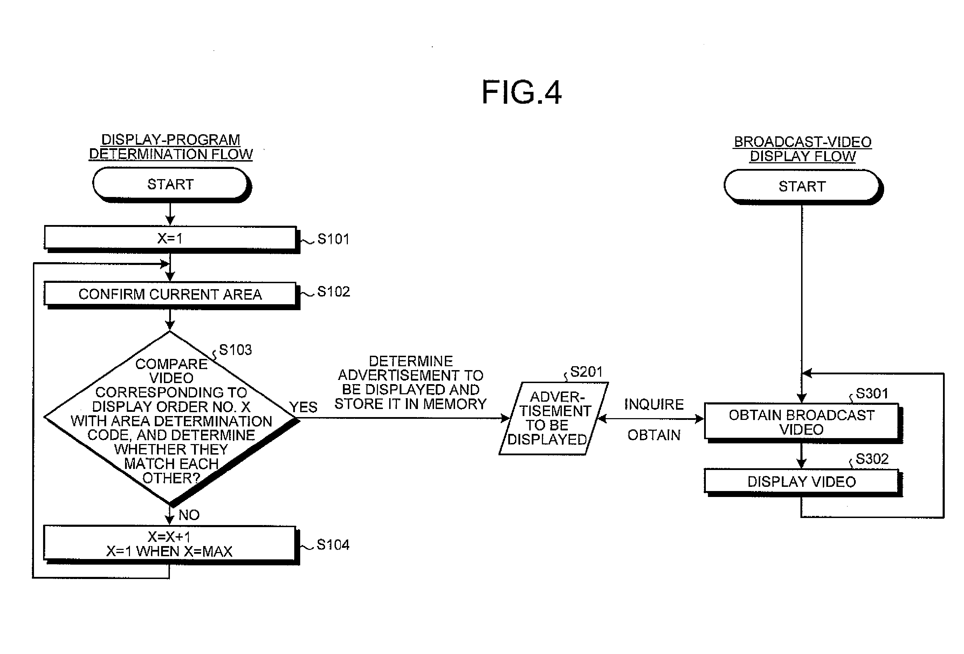

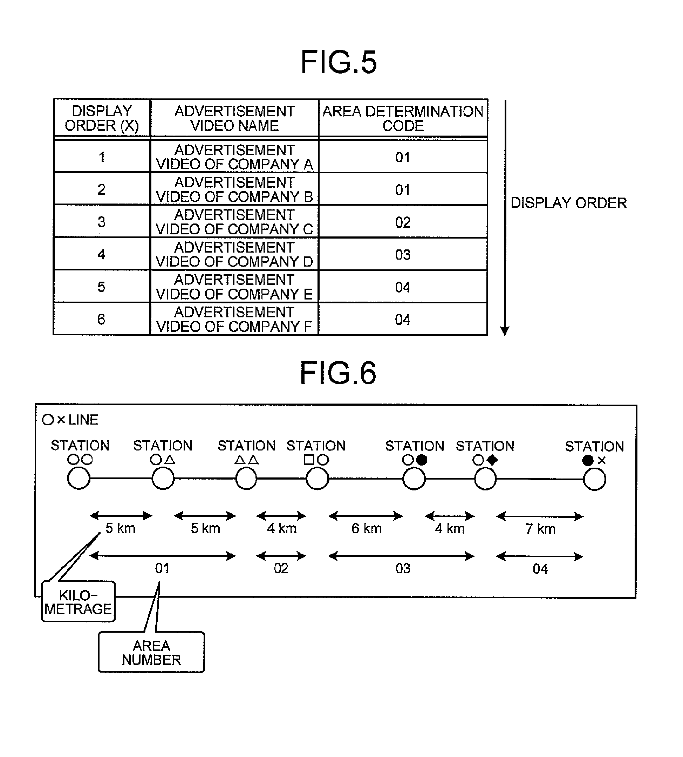

Operations of the train-mounted video information distribution and display system according to the first embodiment are explained next with reference to FIGS. 2 to 6. FIG. 4 is a flowchart of a display-program determination flow and a broadcast-video display flow in the train-mounted video information distribution and display system according to the present embodiment, FIG. 5 is an example of a program table as one of pieces of the reference information described above, and FIG. 6 is an explanatory diagram of a concept of an area determination performed based on the program table shown in FIG. 5.

For example, as shown in the program table in FIG. 5, an order of displayed (X) and an advertisement video name are related to each other in advance, and the advertisement video name is also related to an area determination code. That is, a certain advertisement video is set with an order of displayed among other advertisement videos and this advertisement video, and this video is repeatedly displayed in a running section that is assigned by an area determination code. A concept of an area that is defined by an area determination code is as shown in FIG. 6, for example. In the example of FIG. 6, "area number 01" is set to an area between "station ○○" and "station ΔΔ".

Referring back to FIG. 4, in the display-program determination flow in this drawing, the display-program determining unit 21 first sets a variable X (see FIG. 5) that shows an order of displayed at an initial value (X=1 in the example of FIG. 4) (Step S101), and confirms a current running area in which a train is running (Step S102). Next, the display-program determining unit 21 compares a video that corresponds to an order of displayed (No. X) with an area determination code, and determines whether the video matches the area determination code (Step S103). When the video matches the area determination code (YES at Step S103), the display-program determining unit 21 determines that the video is an advertisement to be displayed, and stores this video in the display-program storage unit 25 (Step S201). On the other hand, when the order of displayed does not match the area determination code (NO at Step S103), the display-program determining unit 21 increments a value of X (X=1 when X=MAX) (Step S104), and repeats processes of Steps S102 to S104.

Meanwhile, the distribution control unit 22 confirms with the display-program determining unit 21 whether an advertisement video is stored in the display-program storage unit 25. When an advertisement video is stored, the distribution control unit 22 obtains this advertisement video (Step S301) and displays this video (Step S302), and also repeatedly performs processes of Steps S301 and S302. In the flow in FIG. 4, the distribution control unit 22 confirms with the display-program determining unit 21 whether an advertisement video is stored in the display-program storage unit 25. Alternatively, the distribution control unit 22 can always obtain a video stored in the display-program storage unit 25 and repeatedly display the obtained video, without confirming with the display-program determining unit 21. In the case of this controlling process, a process of the broadcast-video display flow is performed independently of the display-program determination flow.

When a process flow in FIG. 4 is performed, the following process is performed in the program table shown in FIG. 5 as an example. First, in "area 01" between the "station ○○" and the "station ΔΔ", advertisement videos of a company A and a company B are repeatedly broadcast such as "company A" → "company B" → "company A" → "company B", ... In "area 02" between the "station ΔΔ" and "station Do", an advertisement video of a company C is repeatedly broadcast such as "company C" → "company C" → "company C" →, ... Thereafter, similarly, in "area 03" between the "station □○" and "station ○●", an advertisement video of a company D is repeatedly broadcast. In "area 04" between the "station ○●" and "station ●×", advertisement videos of a company E and a company F are repeatedly broadcast.

Area determination codes in the program table in FIG. 5 can be arbitrarily set without giving any influence to contents of advertisement videos of the companies, and can be arbitrarily changed by performing a remote transmission from a way side to the train side. Therefore, the maintainability and serviceability of the system can be improved. Further, even when there is a change request of a display section of an advertisement video from a sponsor side, for example, it suffices that only an area determination code that is attached corresponding to an advertisement video concerned is changed. Therefore, it is possible to promptly respond to a need of the sponsor side.

As is also shown in the process of the display-program determination flow in FIG. 4, regarding video information stored in the display-program storage unit 25, video information that corresponds to a new display area is automatically stored at a point of time when a display area is changed. Therefore, a new program table can be easily generated without performing any complicated controlling process.

As is also shown in the process of the display-program determination flow in FIG. 4, the distribution control unit 22 can obtain and broadcast video information (broadcast information) stored in the display-program storage unit 25, regardless of the process of the display-program determining unit 21. Therefore, the distribution control unit 22 can obtain and broadcast a video being output to the display-program storage unit 25, that is, video information that is currently in the middle of being output and the whole of which is not yet completely output. Consequently, even when an area changes while a train runs, the display-program determining unit 21 outputs an advertisement video corresponding to a new area determination code to the display-program storage unit 25, and at the same time, the distribution control unit 22 takes out information stored in the display-program storage unit 25 and displays this video. As a result, an advertisement video can be continuously displayed without an unnatural interruption of the video, even when an area is switched.

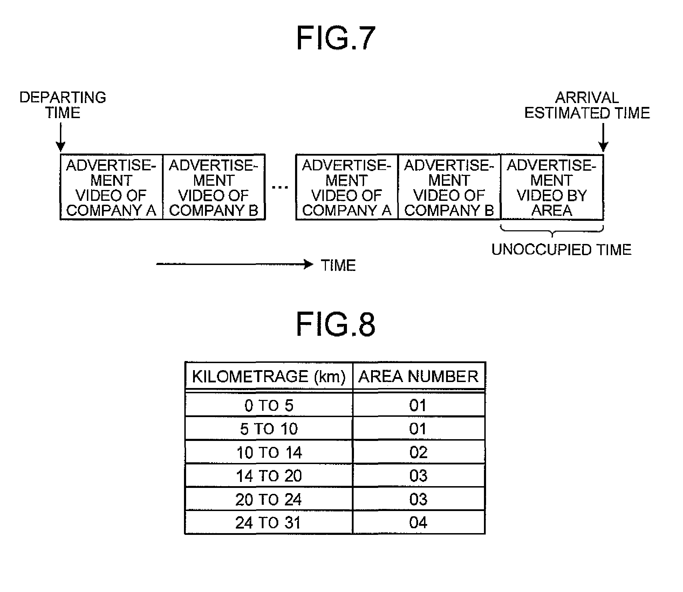

According to a method described above, in a section that is set as the "area 01" between the "station ○○" and the "station ΔΔ", for example, the advertisement videos of the company A and the company B are repeatedly broadcast. A slight unoccupied time occurs depending on a relationship between a distance between the stations and broadcast times of the advertisement videos of both companies. FIG. 7 is an example of a case of broadcasting another advertisement video by using the unoccupied time.

In FIG. 7, an occupied time within the area 01 can be calculated by using an arrival estimated time of a train that is obtained through the train information device 10. The display-program determining unit 21 can broadcast an advertisement video relevant to the area of the "area 01", for example, by using this unoccupied time. This method is based on a concept that a display program is generated in advance, and not based on a concept that an interruption process and a priority process as described above in Patent Document 1 are performed. Therefore, a time position for a display does not need to be the last of a broadcast time, and can be inserted after an end of broadcasting a video of each company during a broadcast time of the company A and the company B that is repeatedly broadcast. Because an unoccupied time of a broadcast time changes depending on a distance of an area section and a broadcast time of an advertisement video of each company, regarding advertisement videos to be inserted, videos that have various lengths such as a video of a short broadcast time, a video of an intermediate broadcast time, and a video of a long broadcast time, for example, can be prepared in advance. With this configuration, a display program in which a broadcast time is effectively used can be generated.

Furthermore, in the present embodiment, a display program is determined based on an area determination code that corresponds to an area number at one to one. Various methods are considered for determining an area number that assigns a running area. Details are explained in the following embodiments. Area numbers are set to determine "segmentation" for determining in which running sections many "advertisement videos" should be displayed. Hereinafter, information ("segmentation information") that is necessary for this segmentation is called "status".

As explained above, according to the train-mounted video information distribution and display system in the present embodiment, the distribution control unit 22 sequentially reads out and distributes to the display device 40 display programs that include one or more pieces of video information which are determined based on segmentation information for assigning a predetermined section within a running section of a train. Therefore, in the predetermined section, the determined one or more pieces of video information are repeatedly displayed. Consequently, the advertising effect of advertisement videos to be broadcast in the train can be increased, and reduction of the maintainability and serviceability can be suppressed.

### Second embodiment.

In a second embodiment, an example of switching advertisement videos based on information of "kilometrage" is explained. That is, in the present embodiment, an example of using "kilometrage" as the "status" mentioned above is explained.

FIG. 8 is an example of a determination table for determining an area number by using only kilometrage. This determination table is also one of pieces of the reference information. According to FIG. 8, a section of kilometrage of "0 to 10 kilometers (km)" is set at an area number "01", that of kilometrage of "10 to 14 km" is set at an area number "02", that of kilometrage of "14 to 24 km" is set at an area number "03", and that of kilometrage of "24 to 31 km" is set at an area number "04", for example.

An advantage of determining an area number by using only kilometrage is that this method is effective for a long-distance train such as Shinkansen bullet train, for example. In the case of a long-distance train, a process can be simplified by determining an area number by using kilometrage because the number of stopping stations is small. Although the example shown in FIG. 8 uses a determination table in which kilometrage between stations is a unit, the kilometrage between stations does not need to be a unit, and an area number can be also determined based on a determination table in which a total operating distance is segmented in a unit of 20 km, for example.

### Third embodiment.

In the train-mounted video information distribution and display system according to the second embodiment, an example of using the "kilometrage" as the "status" to switch an advertisement video has been explained. In a third embodiment, an example of using information of the "last station (the station stopped immediately before)" and the "next station (the next stopping station)" as the "status" is explained. It is needless to mention that the present embodiment can be combined with each of the first and second embodiments.

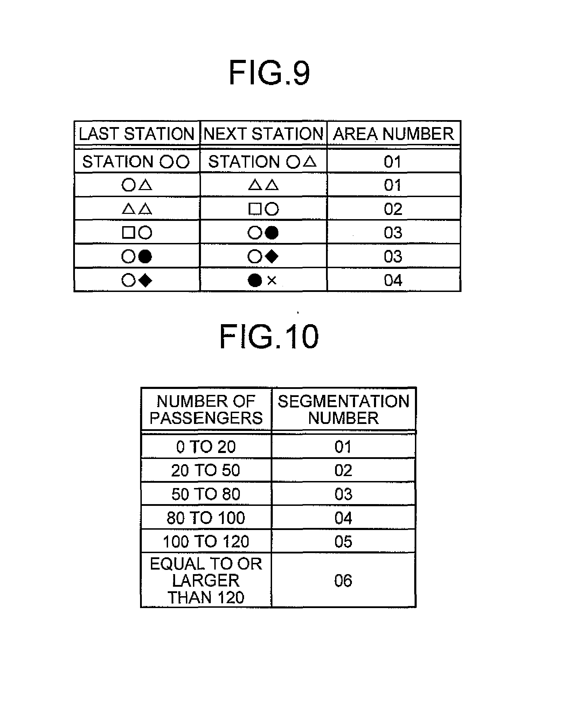

FIG. 9 is an example of a determination table for determining an area number by using information of a last station and a next station. This determination table is also a piece of the reference information described above. According to FIG. 9, an area between the "station ○○" and the "station ΔΔ" is set at an area number "01". Thereafter, an area between the "station ΔΔ" and the "station □○" is set at an area number "02". An area between the "station □○" and "station ○◆" is set at an area number "03". An area between the "station ○◆" and the "station ●×" is set at an area number "04", for example.

An advantage of determining an area number by using the information of a last station and a next station is that this method is effective when there is a station where a limited express train, an express train, and a rapid train (hereinafter, "limited express train and the like") do not stop.

When the determination table as explained in the present embodiment is provided, when there is an advertisement video relevant to only a non-stopping station, for example, this advertisement video can be skipped. By skipping such an advertisement video not relevant to a stopping station, advertisement videos in hand can be effectively used within a limited time and space. When such a determination table is held uniformly and also when a determination table is used for each limited express train and the like and for each station that stops at each station, it is not necessary to distinguish an advertisement video itself and a mode of the system between a limited express train and a train that stops at each station. Consequently, the maintainability and serviceability of the system can be improved.

### Fourth embodiment.

In the train-mounted video information distribution and display system according to the third embodiment, an example of using information of the "last station (the station stopped immediately before)" and the "next station (the next stopping station)" as the "status" has been explained. In a fourth embodiment, an example of using the number of passengers as the "status" is explained. It is needless to mention that the present embodiment can be combined with each of the first to third embodiments.

FIG. 10 is an example of a determination table in which information of the "number of passengers" is used as the status. This determination table is also a piece of the reference information described above. The information of the number of passengers can be obtained through the train information device 10. According to FIG. 10, a segmentation number is set at "01" when the number of passengers is "equal to or smaller than 20". Thereafter, the segmentation number is set at "02" when the number of passengers is "20 to 50", the segmentation number is set at "03" when the number of passengers is "50 to 80", the segmentation number is set at "04" when the number of passengers is "80 to 100", the segmentation number is set at "05" when the number of passengers is "100 to 120", and the segmentation number is set at "06" when the number of passengers is "equal to or larger than 120", for example.

The segmentation information that is determined by using the information of the number of passengers can be used as the information for selecting an advertisement video to be inserted into an unoccupied time, for example. For example, when the number of passengers is equal to or larger than a certain number and is also equal to or smaller than a certain number, it means there are an appropriate number of passengers who watch the advertisement video. In this state, the advertisement video can be watched easily so that an advertising effect can be expected. Therefore, among advertisement videos to be inserted into an unoccupied time, an advertisement video of which advertizing fee is high can be displayed with a priority (generates a program table for displaying with a priority an advertisement video of which advertising fee is high) .

When a determination table as explained in the present embodiment is held, it is possible to rightly respond to diversified needs of users. A specific effect of advertisement videos can be further increased.

### Fifth embodiment.

In the train-mounted video information distribution and display system according to the fourth embodiment, an example of using the number of passengers as the "status" has been explained. In a fifth embodiment, an example of using information of "temperature" as the "status" is explained. It is needless to mention that the present embodiment can be combined with each of the first to fourth embodiments.

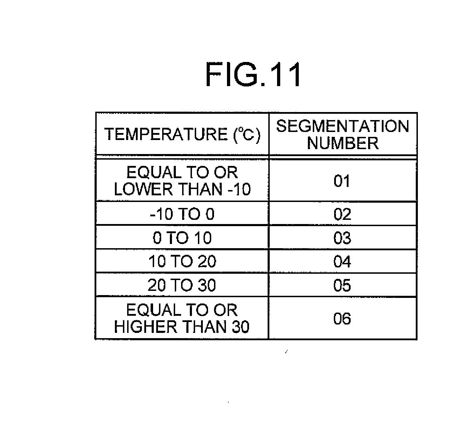

FIG. 11 is an example of a determination table in which information of "temperature" is used as the status. This determination table is also a piece of the reference information described above. The temperature information can be obtained through the train information device 10. According to FIG. 11, a segmentation number is set at "01" when the temperature is "equal to or lower than -10°C". Thereafter, the segmentation number is set at "02" when the temperature is "-10 to 0°C", the segmentation number is set at "03" when the temperature is "0 to 10°C", the segmentation number is set at "04" when the temperature is "10 to 20°C", the segmentation number is set at "05" when the temperature is "20 to 30°C", and the segmentation number is set at "06" when the temperature is "equal to or higher than 30°C", for example.

The segmentation information that is determined by using the temperature information can be used as the information for selecting an advertisement video to be inserted into an unoccupied time, for example. When the temperature is high, for example, an advertisement concerning a cooling apparatus or a cold cake can be inserted as an advertisement video that uses an unoccupied time. On the other hand, when the temperature is low, an advertisement concerning a heating device or food information such as noodles can be inserted.

When a determination table as explained in the present embodiment is held, advertisement videos in hand can be effectively used within a limited time and space. When video information is within a range of a storage capacity of the video-information storing unit 24, it is not necessary to provide a maintenance service of changing video information at each change of the season. Consequently, the maintainability and serviceability of the system can be improved.

Although an example of using information of the "temperature" as the "status" has been explained in the present embodiment, information other than the "temperature" can be also used as the "status", such as "humidity (high/medium/low)", "weather (rainy/sunny)", "occupancy rate (high/medium/low)", "time (morning/noon/evening)", "car number (women-only car/others, weakly air-conditioned car/others, nonsmoking car/smoking car, a plural-car unit (such as first to fifth cars/sixth to tenth cars/tenth to fifteenth cars), "day of the week (weekdays/Saturdays and holidays)", "type of train (limited express/local)", and "destination (urban area/suburbs)". When this information is combined the above embodiments, it becomes possible to rightly respond to diversified user needs.

### INDUSTRIAL APPLICABILITY

As described above, the train-mounted video information distribution and display system and the display switching method thereof according to the present invention are useful as an invention capable of sufficiently increasing an advertising effect of advertisement videos to be broadcast in a train.

## Claims

1. A train-mounted video information distribution and display system that is adapted to display a plurality of pieces of video information as advertisement videos on a display device (40) in a train based on train information of an own train that is obtained from a train information device (10) mounted in the train, the system comprising:
a display-program determining unit (21) that is adapted to extract one or more pieces of video information from the pieces of video information and determine a display program to be displayed on the display device (40);
a video-information storing unit (24) that is adapted to hold the video information and reference information that is necessary to determine the display program;
a display-program storage unit (25) that is adapted to receive a display program which is determined by the display-program determining unit (21) from the video-information storing unit (24), and hold a received display program; and
a distribution control unit (22) that is adapted to sequentially read out display programs stored in the display-program storage unit (25) and distribute the read display programs to the display device (40), wherein
the display program includes one or more pieces of video information that are determined based on segmentation information for assigning a predetermined section within a running section of the train, and the determined one or more pieces of video information are repeatedly displayed in the predetermined section,
**characterised in that**
the distribution control unit (22) is adapted to obtain and broadcast video information output to the display-program storage unit (25) such that a change in the running section of the train does not interrupt the display of the video information, which is currently not yet completely output, when the running section is switched.

2. The train-mounted video information distribution and display system according to claim 1, wherein as the reference information, the system includes a reference table that defines a correspondence relationship between an area determination code that corresponds at one to one to an area number for identifying the predetermined section, video information to be displayed in a section that is identified by the area number, and an order of displayed of the video information.

3. The train-mounted video information distribution and display system according to claim 2, wherein the area number is determined based on kilometrage information.

4. The train-mounted video information distribution and display system according to claim 2, wherein the area number is determined based on stopping-station information.

5. The train-mounted video information distribution and display system according to claim 2, wherein the system displays video information of which types are different from those of the pieces of video information that are assigned by the area determination code, by using an unoccupied time within a broadcast time of video information that is repeatedly displayed in the predetermined section.

6. The train-mounted video information distribution and display system according to claim 5, wherein video information that is broadcast by using the unoccupied time is provided with the area determination code based on information of number of passengers.

7. The train-mounted video information distribution and display system according to claim 5, wherein video information that is broadcast by using the unoccupied time is provided with the area determination code based on temperature information.

8. The train-mounted video information distribution and display system according to claim 1, wherein video information stored in the video-information storing unit (24) is transmitted from a connected external device.

9. The train-mounted video information distribution and display system according to claim 1, wherein reference information stored in the video-information storing unit (24) is transmitted from a connected external device.

10. The train-mounted video information distribution and display system according to claim 9, wherein the reference information is changed through a connected external device.

11. A display switching method of a train-mounted video information distribution and display system, the system comprising:
a display device (40) that displays predetermined pieces of video information as an advertisement video based on train information of an own train that is obtained from a train information device (10) mounted in a train; and
a video-information storing unit (24) that holds reference information that is necessary to determine a display program that includes a plurality of pieces of video information to be displayed on the display device (40) and one or more pieces of video information extracted from the pieces of video information, wherein the method comprises:
a display-program determining step of extracting one or more pieces of video information from the pieces of video information and determining a display program for displaying the extracted video information on the display device (40); and
a distribution controlling step of distributing a display program that is determined at the display-program determining step to the display device (40), and
the display program includes one or more pieces of video information that are determined based on segmentation information for assigning a predetermined section within a running section of the train and that are repeatedly displayed in the predetermined section,
wherein the distribution controlling step includes broadcasting video information such that a change in the running section of the train does not interrupt the display of the video information, which is currently not yet completely output, when the running section is switched.

## Patentansprüche

1. Zuginstalliertes Videoinformationsverteilungs- und -anzeigesystem, das dazu angepasst ist, mehrere Videoinformationen als Werbevideos an einer Anzeigevorrichtung (40) in einem Zug auf Grundlage von Zuginformation eines eigenen Zugs anzuzeigen, die aus einer im Zug installierten Zuginformationsvorrichtung (10) erhalten ist, wobei das System umfasst:
eine Anzeigeprogrammbestimmungseinheit (21), die dazu angepasst ist, eine oder mehrere Videoinformation/en aus den Videoinformationen zu extrahieren und ein an der Anzeigevorrichtung (40) anzuzeigendes Anzeigeprogramm zu bestimmen;
eine Videoinformationsspeichereinheit (24), die dazu angepasst ist, die Videoinformation und Referenzinformation vorzuhalten, die notwendig ist, um das Anzeigeprogramm zu bestimmen;
eine Anzeigeprogrammspeichereinheit (25), die dazu angepasst ist, ein Anzeigeprogramm, das durch die Anzeigeprogrammbestimmungseinheit (21) bestimmt ist, aus der Videoinformationsspeichereinheit (24) zu empfangen und ein aufgenommenes Anzeigeprogramm vorzuhalten; und
eine Verteilungssteuereinheit (22), die dazu angepasst ist, Anzeigeprogramme, die in der Anzeigeprogrammspeichereinheit (25) gespeichert sind, sequentiell auszulesen und die ausgelesenen Anzeigeprogramm an die Anzeigevorrichtung (40) zu verteilen, wobei
das Anzeigeprogramm eine oder mehrere Videoinformation/en enthält, die auf Grundlage von Segmentierungsinformation bestimmt sind, um einen vorbestimmten Abschnitt in einem laufenden Abschnitt des Zugs zu bezeichnen, und die eine oder mehreren Videoinformation/en in einem vorbestimmten Abschnitt wiederholt angezeigt werden,
**dadurch gekennzeichnet, dass**
die Verteilungssteuereinheit (22) dazu angepasst ist, an die Anzeigeprogrammspeichereinheit (25) ausgegebene Videoinformation einzuholen und so auszustrahlen, dass eine Änderung im laufenden Abschnitt des Zugs nicht die Anzeige der Videoinformation unterbricht, die aktuell noch nicht vollständig ausgegeben ist, wenn der laufende Abschnitt gewechselt wird.

2. Zuginstalliertes Videoinformationsverteilungs- und -anzeigesystem nach Anspruch 1, wobei das System als die Referenzinformation eine Referenztabelle, die ein Korrespondenzverhältnis zwischen einem Gebietsbestimmungscode, der eins zu eins eine Gebietsnummer zum Kennzeichnen des vorbestimmten Abschnitts definiert, Videoinformation, die in einem durch die Gebietsnummer gekennzeichneten Abschnitt angezeigt werden soll, und eine Anzeigereihenfolge der Videoinformation enthält.

3. Zuginstalliertes Videoinformationsverteilungs- und -anzeigesystem nach Anspruch 2, wobei die Gebietsnummer auf Grundlage von Kilometerleistungsinformation bestimmt ist.

4. Zuginstalliertes Videoinformationsverteilungs- und -anzeigesystem nach Anspruch 2, wobei die Gebietsnummer auf Grundlage von Haltestationsinformation bestimmt ist.

5. Zuginstalliertes Videoinformationsverteilungs- und -anzeigesystem nach Anspruch 2, wobei das System Videoinformation, deren Arten sich von denjenigen der durch den Gebietsbestimmungscode bezeichneten Videoinformationen unterscheiden, unter Verwendung einer unbesetzten Zeit in einer Rundsendezeit von Videoinformation anzeigt, die im vorbestimmten Abschnitt wiederholt angezeigt wird.

6. Zuginstalliertes Videoinformationsverteilungs- und -anzeigesystem nach Anspruch 5, wobei unter Verwendung der unbesetzten Zeit ausgestrahlte Videoinformation auf Grundlage von Information über die Anzahl von Fahrgästen mit dem Gebietsbestimmungscode versehen wird.

7. Zuginstalliertes Videoinformationsverteilungs- und -anzeigesystem nach Anspruch 5, wobei unter Verwendung der unbesetzten Zeit ausgestrahlte Videoinformation auf Grundlage von Temperaturinformation mit dem Gebietsbestimmungscode versehen wird.

8. Zuginstalliertes Videoinformationsverteilungs- und -anzeigesystem nach Anspruch 1, wobei in der Videoinformationsspeichereinheit (24) gespeicherte Videoinformation von einer verbundenen externen Vorrichtung übertragen wird.

9. Zuginstalliertes Videoinformationsvertellungs- und -anzeigesystem nach Anspruch 1, wobei in der Videoinformationsspeichereinheit (24) gespeicherte Referenzinformation von einer verbundenen externen Vorrichtung übertragen wird.

10. Zuginstalliertes Videoinformationsverteilungs- und -anzeigesystem nach Anspruch 9, wobei die Referenzinformation durch eine verbundene externe Vorrichtung verändert wird.

11. Anzeigewechselverfahren eines zuginstallierten Videoinformationsverteilungsund -anzeigesystems, wobei das System umfasst:
eine Anzeigevorrichtung (40), die vorbestimmte Videoinformationen als Werbevideo auf Grundlage von Zuginformation eines eigenen Zugs anzeigt, die aus einer in einem Zug montierten Zuginformationsvorrichtung (10) erhalten ist; und
eine Videoinformationsspeichereinheit (24), die Referenzinformation vorhält, die notwendig ist, um eine Anzeigeprogramm zu bestimmen, das mehrere an einer Anzeigevorrichtung (40) anzuzeigende Videoinformationen und eine oder mehrere aus den Videoinformationen extrahierte Videoinformationen enthält, wobei das Verfahren umfasst:
einen Anzeigeprogrammbestimmungsschritt zum Extrahieren einer oder mehrerer Videoinformation/en aus den Videoinformationen und zum Bestimmen eines Anzeigeprogramms, um die extrahierte Videoinformation an der Anzeigevorrichtung (40) anzuzeigen; und
einen Verteilungssteuerschritt zum Verteilen eines im Anzeigeprogrammbestimmungsschritt bestimmten Anzeigeprogramms an die Anzeigevorrichtung (40), und
das Anzeigeprogramm eine oder mehrere Videoinformation/en enthält, die auf Grundlage von Segmentierungsinformation bestimmt wird/werden, um einen vorbestimmten Abschnitt in einem laufenden Abschnitt des Zugs zu bezeichnen, und die in dem vorbestimmten Abschnitt wiederholt angezeigt werden,
wobei der Verteilungssteuerschritt umfasst, Videoinformation so auszustrahlen, dass eine Änderung im laufenden Abschnitt des Zugs nicht die Anzeige der Videoinformation unterbricht, die aktuell noch nicht vollständig ausgegeben ist, wenn der laufende Abschnitt gewechselt wird.

## Revendications

1. Système de distribution et d'affichage d'informations vidéo monté dans un train, qui est apte à afficher une pluralité d'éléments d'informations vidéo comme vidéos publicitaires sur un appareil d'affichage (40) dans un train sur la base d'informations de train d'un propre train qui sont obtenus à partir d'un appareil d'informations de train (10) monté dans le train, le système comprenant :
une unité de détermination de programme d'affichage (21) qui est apte à extraire un ou plusieurs éléments d'informations vidéo à partir des éléments d'informations vidéo et à déterminer un programme d'affichage devant être affiché sur l'appareil d'affichage (40) ;
une unité de stockage d'informations vidéo (24) qui est apte à contenir les informations vidéos et des informations de référence qui sont nécessaires pour déterminer le programme d'affichage ;
une unité de stockage de programme d'affichage (25) qui est apte à recevoir un programme d'affichage qui est déterminé par l'unité de détermination de programme d'affichage (21) à partir de l'unité de stockage d'informations vidéo (24), et contenir un programme d'affichage reçu ; et
une unité de commande de distribution (22) qui est apte à lire séquentiellement des programmes d'affichage stockés dans l'unité de stockage de programme d'affichage (25) et distribuer les programmes d'affichage lus à l'appareil d'affichage (40), sachant que
le programme d'affichage inclut un ou plusieurs éléments d'informations vidéo qui sont déterminés sur la base d'informations de segmentation destinées à assigner une section prédéterminée au sein d'une section de déplacement du train, et le ou les éléments déterminés d'informations vidéo sont affichés de manière répétée dans la section prédéterminée,
**caractérisé en ce que**
l'unité de commande de distribution (22) est apte à obtenir des informations vidéo sorties vers l'unité de stockage de programme d'affichage (25) et à les diffuser de telle sorte qu'un changement dans la section de déplacement du train n'interrompe pas l'affichage des informations vidéo, qui ne sont actuellement pas encore entièrement sorties, lorsque la section de déplacement est commutée.

2. Le système de distribution et d'affichage d'informations vidéo monté dans un train selon la revendication 1, dans lequel, en tant que les informations de référence, le système inclut un tableau de référence qui définit une relation de correspondance entre un code de détermination de zone qui correspond un à un à un numéro de zone destiné à identifier la section prédéterminée, des informations vidéo devant être affichées dans une section qui est identifiée par le numéro de zone, et un ordre d'affichage des informations vidéo.

3. Le système de distribution et d'affichage d'informations vidéo monté dans un train selon la revendication 2, dans lequel le numéro de zone est déterminé sur la base d'informations de kilométrage.

4. Le système de distribution et d'affichage d'informations vidéo monté dans un train selon la revendication 2, dans lequel le numéro de zone est déterminé sur la base d'informations de gare d'arrêt.

5. Le système de distribution et d'affichage d'informations vidéo monté dans un train selon la revendication 2, dans lequel le système affiche des informations vidéo dont les types sont différents de ceux des éléments d'informations vidéo qui sont assignés par le code de détermination de zone, en utilisant un temps inoccupé au sein d'un temps de diffusion d'informations vidéo qui sont affichées de manière répétée dans la section prédéterminée.

6. Le système de distribution et d'affichage d'informations vidéo monté dans un train selon la revendication 5, dans lequel des informations vidéo qui sont diffusées en utilisant le temps inoccupé sont pourvues du code de détermination de zone sur la base d'informations de nombre de passagers.

7. Le système de distribution et d'affchage d'informations vidéo monté dans un train selon la revendication 5, dans lequel des informations vidéo qui sont diffusées en utilisant le temps inoccupé sont pourvues du code de détermination de zone sur la base d'informations de température.

8. Le système de distribution et d'affichage d'informations vidéo monté dans un train selon la revendication 1, dans lequel des informations vidéo stockées dans l'unité de stockage d'informations vidéo (24) sont transmises à partir d'un appareil externe connecté.

9. Le système de distribution et d'affichage d'informations vidéo monté dans un train selon la revendication 1, dans lequel des informations de référence stockées dans l'unité de stockage d'informations vidéo (24) sont transmises à partir d'un appareil externe connecté.

10. Le système de distribution et d'affichage d'informations vidéo monté dans un train selon la revendication 9, dans lequel les informations de référence sont modifiées via un appareil externe connecté.

11. Procédé de commutation d'affichage d'un système de distribution et d'affichage d'informations vidéo monté dans un train, le système comprenant :
un appareil d'affichage (40) qui affiche des éléments prédéterminés d'informations vidéo en tant que vidéos publicitaires sur la base d'informations de train d'un propre train qui sont obtenues à partir d'un appareil d'informations de train (10) monté dans un train ; et
une unité de stockage d'informations vidéo (24) qui contient des informations de référence qui sont nécessaires pour déterminer un programme d'affichage qui inclut une pluralité d'éléments d'informations vidéo devant être affichés sur l'appareil d'affichage (40) et un ou plusieurs éléments d'informations vidéo extraits des éléments d'informations vidéo, sachant que le procédé comprend :
une étape de détermination de programme d'affichage consistant à extraire un ou plusieurs éléments d'informations vidéo à partir des éléments d'informations vidéo et à déterminer un programme d'affichage destiné à afficher les informations vidéo extraites sur l'appareil d'affichage (40) ; et
une étape de commande de distribution consistant à distribuer vers l'appareil d'affichage (40) un programme d'affichage qui est déterminé à l'étape de détermination de programme d'affichage, et
le programme d'affichage inclut un ou plusieurs éléments d'informations vidéo qui sont déterminés sur la base d'informations de segmentation destinées à assigner une section prédéterminée au sein d'une section de déplacement du train et qui sont affichés de manière répétée dans la section prédéterminée,
sachant que l'étape de commande de distribution inclut la diffusion d'informations vidéo de telle sorte qu'un changement dans la section de déplacement du train n'interrompe pas l'affichage des informations vidéo, qui ne sont actuellement pas encore entièrement sorties, lorsque la section de déplacement est commutée.
